# EUROPÄISCHE PATENTANMELDUNG

(11) **EP 3 839 409 A1**
(43) Veröffentlichungstag der Anmeldung: **23.06.2021**
(21) Anmeldenummer: 20208769.8
(22) Anmeldetag: 19.11.2020
(51) Int. Cl.: F41A 31/02, G01N 21/954, G01N 22/02, G01N 29/04

(54) **DETEKTIONSVORRICHTUNG UND VERFAHREN ZUR DETEKTION VON STÖRFAKTOREN IN EINEM WAFFENROHR ODER LADEROHR EINER ROHRWAFFE**

(30) Priorität: 18.12.2019 DE 102019134884
(71) Anmelder: Rheinmetall Air Defence AG, 8050 Zürich (CH)
(72) Erfinder: Wüthrich, Andreas, 8117 Fällanden (CH)
(74) Vertreter: Kirschner, Sebastian

(57) **Zusammenfassung**

Die Erfindung betrifft eine Detektionsvorrichtung (1) zur Erkennung von Störfaktoren (16, 17) in einem Rohr (2), mit einem Emitter (6.1), einem Sensor (7.1) und einem Halter (3), wobei das Rohr (2) als Waffenrohr oder Laderohr einer Rohrwaffe ausgebildet ist, wobei der Emitter (6.1) und der Sensor (7.1) an dem Halter (3) angeordnet sind. Probleme bei der Entwicklung, Wartung und beim Austausch des Rohres (2) sind dadurch vermieden, dass der Emitter (6.1) mit einem axialen Abstand (d) zu einem Rohrende (8, 9) angeordnet ist, wobei der Emitter (6.1) einen radialen Abstand (e) zu einer Längsachse (10) des Rohres (2) aufweist, welcher größer ist als der radiale Abstand einer Innenwand (11) des Rohres (2) zu dessen Längsachse (10), wobei der Sensor (7.1) mit einem axialen Abstand (d) zu dem Rohrende (8, 9) angeordnet ist, wobei der Sensor (7.1) einen radialen Abstand (e) zu der Längsachse (10) des Rohres (2) aufweist, welcher größer ist als der radiale Abstand der Innenwand (11) des Rohres (2) zu dessen Längsachse (10),

wobei mittels des Emitters (6.1) Messsignale (12) in das Rohr (2) hinein emittierbar sind und wobei mittels des Sensors (7.1) reflektierte Messsignale (12) empfangbar sind.

## Beschreibung

Die Erfindung betrifft eine Detektionsvorrichtung mit den Merkmalen des Oberbegriffes des Patentanspruches 1 und ein Verfahren mit den Merkmalen des Oberbegriffes des Patentanspruches 12 zur Detektion von Störfaktoren in einem als Waffenrohr oder Laderohr einer Rohrwaffe ausgebildeten Rohres.

Durch die fortschreitende Automatisierung von bewaffneten Fahrzeugen ist es notwendig, dass das Laden einer Waffe von z.B. einem Panzer automatisiert erfolgt. Dabei spielt Zuverlässigkeit eine große Rolle. So kann es passieren, dass eine Munition nicht zündet oder dass Teile der Munition in einem Waffenrohr oder einem Laderohr nach einem Schuss zurückbleiben. Eine nicht gezündete Munition wird als Blindgänger, Teile der Munition als Munitionsfragmente bezeichnet. Wird in so einem Fall die nächste Munition geladen, ohne dabei die Blindgänger oder Munitionsfragmente zu entfernen, kann dies zu schwerwiegenden Problemen führen. In der Vergangenheit wurden bewaffnete Fahrzeuge von Menschen geladen. Diese hatten nach Absaugung von Gasen die Möglichkeit, in das Rohr hineinzuschauen und auf mögliche Störfaktoren wie z.B. die besagten Blindgänger oder Fragmente zu untersuchen. Aber auch dies gestaltete sich z.B. nachts oder bei sehr kleinen Störfaktoren als schwierig. Ist der Störfaktor als Defekt am Rohr selbst ausgeprägt, wie z.B. als Riss, als Ausbruch, als Abnutzung sonstiger Art oder als Korrosion, ist dies mit bloßem Auge nur schwer oder gar nicht zu erkennen.

Aus der DE 19 737 078 A1 ist eine Vorrichtung zur Detektion des Ladezustandes eines Waffenrohres bekannt. Durch einen außen direkt am Waffenrohr angebrachten Körperschallwellenerreger werden Körperschallwellen in dem Waffenrohr erzeugt und danach werden diese Körperschallwellen mit einem Körperschallsensor wieder gemessen. Der Körperschallsensor ist dabei als piezoelektrischer Beschleunigungssensor ausgeführt. Eine Verarbeitungseinheit wertet die empfangenen Daten aus und gleicht diese mit Referenzwerten ab, um eine Abweichung vom Normzustand zu detektieren. Diese Vorrichtung dient lediglich zur Detektion des Ladezustandes, das heißt zur Feststellung, ob Munition im Waffenrohr vorhanden ist oder nicht. Sie dient nicht zur Feststellung anderer Störfaktoren.

Aus der US 2019 0 011 208 A1 sind Sensoren bekannt, welche über die volle Länge des Waffenrohres angebracht sind, um den Zustand im Waffenrohr auf voller Länge zu detektieren. Als Sensoren können hierbei piezoelektrische Sensoren, Hall-Sensoren, Dehnungsmessstreifen, Temperatursensoren, Drucksensoren und beliebige Kombinationen derer zum Einsatz kommen. Diese Sensoren dienen insbesondere dazu, den Schuss zu überwachen. Dabei werden z.B. die Schussgeschwindigkeit, die Feuerrate oder Schwingungen des Waffenrohres detektiert. Mit Hilfe der Temperatur und der Gesamtanzahl bisher abgefeuerter Schüsse können des Weiteren Rückschlüsse auf den Verschleiß durchgeführt werden. Notwendige Wartungsarbeiten sind so rechtzeitig einleitbar.

Aus der US 5 825 948 A ist ein Detektionsverfahren bekannt, welches mit Hilfe von Lichtwellenleitern durchgeführt wird. Diese Lichtwellenleiter werden an zwei Seiten des Waffenrohres auf einem bestimmten Längenbereich des Waffenrohres befestigt. Primär dienen die Lichtwellenleiter dazu, die Neigung des Waffenrohres zu detektieren, um ein möglichst genaues Zielen zu ermöglichen. Ist das Waffenrohr nun verbogen oder verformt, kann dies ebenfalls über die Laufwege des Lichtes innerhalb der Lichtwellenleiter bestimmt werden und die Zielgenauigkeit wird weiter erhöht.

Alle vorgenannten Vorrichtungen haben die Gemeinsamkeit, dass ein Sensor außen am Waffenrohr befestigt werden muss. Dies führt zu Schwierigkeiten bei der Entwicklung, Wartung und dem Austausch der Waffenrohre. Müssen zur Montage der Sensoren Bohrungen oder Aussparungen erzeugt werden, wird sogar die Struktur des Waffenrohres geschwächt.

Es ist daher die Aufgabe der Erfindung, eine Detektionsvorrichtung und ein Verfahren zur Erkennung von Störfaktoren in einem Rohr bereitzustellen, wobei das Rohr als Waffenrohr oder Laderohr einer Rohrwaffe ausgebildet ist, ohne dass die Entwicklung des Rohres, die Wartung des Rohres oder der Austausch des Rohres durch die Detektionsvorrichtung behindert werden.

Weiterhin soll sich die Detektionsvorrichtung in den Ablauf einer automatischen Munitionsladevorrichtung einfügen, ohne diesen zu stören, zu verzögern oder diesen Ablauf ganz zu verhindern.

Die Aufgabe wird durch eine Detektionsvorrichtung mit den Merkmalen des Patentanspruchs 1 gelöst, indem ein Emitter mit einem axialen Abstand zu einem Rohrende angeordnet ist, wobei der Emitter einen radialen Abstand zu einer Längsachse eines Rohres aufweist, welcher größer ist als der radiale Abstand einer Innenwand des Rohres zu dessen Längsachse, wobei ein Sensor mit einem axialen Abstand zu einem Rohrende angeordnet ist, wobei der Sensor einen radialen Abstand zu einer Längsachse des Rohres aufweist, welcher größer ist als der radiale Abstand der Innenwand des Rohres zu dessen Längsachse,
wobei mittels des Emitters Messsignale in das Rohr hinein emittierbar sind und wobei mittels des Sensors reflektierte Messsignale empfangbar sind. Die Erfindung betrifft insbesondere die Anordnung der Detektionsvorrichtung insbesondere der Bauteile der Detektionsvorrichtung relativ zum Rohr sowie die Ausgestaltung der Bauteile.

Eine solche Anordnung der Detektionsvorrichtung neben dem Rohr führt dazu, dass durch die Detektionsvorrichtung kein Eingriff in das Waffensystem notwendig ist. Das Rohr weist vorzugsweise keine strukturschwächenden Befestigungsmittel für die Detektionsvorrichtung auf. Die Detektionsvorrichtung ist an unterschiedlichen Rohrtypen bzw. Waffensystemen einsetzbar. Ein besonders einfacher Austausch eines defekten Rohres gegen ein anderes, einwandfreies Rohr ist ohne Wechsel der Detektionsvorrichtung möglich. Weiterhin ist eine besonders einfache Konstruktion der Detektionsvorrichtung möglich, da die Ausführung des Rohres eine untergeordnete Rolle spielt.

Durch die Emittierung der Messsignale von außen in das Rohr hinein, gelangen die Messsignale direkt zu den zu überprüfenden Bereichen, nämlich dem Innenraum des Rohres und dem Innenmantel des Rohres. Das macht eine Auswertung der Messsignale besonders einfach, da das Messsignal nicht durch weitere Bauteile beeinflusst wird.

Das Waffenrohr weist zwei Rohrenden auf, eine Rohrmündung zur Abgabe der Munition und ein Zuführende zur Zufuhr der Munition. Das Waffensystem kann ein separates Laderohr zur Zufuhr der Munition zum Waffenrohr aufweisen. Die Detektionsvorrichtung kann sowohl für ein Waffenrohr, wie auch für ein Laderohr verwendet werden.

Die Längsachse des Rohres ist eine gedachte Gerade, welche an jeder Stelle den gleichen Abstand zum Innenmantel des Rohres aufweist.

In einer weiteren Ausführungsform der Erfindung weist ein Halter einen Rahmen auf, wobei der Rahmen eine Öffnung begrenzt, durch welche die Munition hindurchführ- oder hindurchschießbar ist.

Der Rahmen könnte z.B. als ringförmiges Bauteil mit einer kreisförmigen Öffnung ausgeführt sein. Denkbar ist auch eine eckige Ausführung des Rahmens. Der Rahmen kann geschlossen ausgeführt sein, so dass sich eine begrenzte Form der Öffnung ergibt. Ein Unterbrechung des Rahmens ist auch denkbar. Der geometrischen Gestaltung des Rahmens ist keine Grenze gesetzt, wichtig ist lediglich, dass die Munition am Rahmen vorbei dem Rohr zugeführt werden kann. So ist eine besonders einfache Integration der Detektionsvorrichtung in eine automatische Munitionsladevorrichtung möglich. Es ist ein besonders schneller und reibungsloser Übergang zwischen der Detektion von Störfaktoren und der Zufuhr der Munition möglich.

In einer bevorzugten Ausführungsform der Erfindung sind zwei oder mehrere Emitter an dem Halter angeordnet. So ist eine besonders genaue Abtastung des Innenraumes und des Innenmantels des Rohres möglich. Auch kleinere Störfaktoren können so erkannt werden. Weiterhin ist deren Ausprägung und Lage sehr präzise bestimmbar. Die Überlagerung der Messsignale, welche dabei von den zwei oder mehreren Emittern von unterschiedlichen Positionen ausgesendet werden ist vorteilhaft, da hierdurch unterschiedliche Innenwandbereiche des Rohres abgedeckt werden können.

Vorteilhafterweise sind zwei oder mehrere Sensoren an dem Halter angeordnet. Bei Verwendung zweier oder mehrerer Sensoren ist eine sehr umfassende Aufnahme der vom Rohr reflektierten Messsignale möglich. Die am Sensor eingehenden Messsignale werden vom Sensor aufgenommen und in elektrische Signale umgewandelt. Die elektrischen Signale liefern aufgrund der Verwendung zweier oder mehrerer Sensoren ein genaues Abbild des Innenraumes und des Innenmantels des Rohres inklusive etwaiger Störfaktoren.

Bevorzugterweise sind zwei oder mehrere Emitter und/oder zwei oder mehrere Sensoren in einer Ebene senkrecht zur Längsachse angeordnet. Aufgrund dieser Anordnung weisen die Emitter und/oder die Sensoren gleiche axiale Abstände zu einer Ebene auf, welche durch das nächstliegende Rohrende gebildet wird. Aufgrund dieser gleichen Abstände ist eine besonders einfache Auswertung aller Messsignale möglich, da diese sehr ähnlich zueinander sind und somit auf ähnliche Weise verarbeitbar sind. Zudem ist es sinnvoll den gleichen Abstand für alle Sensoren zu verwenden.

Besonders bevorzugt weisen zwei oder mehrere Emitter und/oder zwei oder mehrere Sensoren einen gleichen Abstand zur Längsachse auf. Dies führt zu einer weiteren Vereinfachung der Auswertung der Messsignale. Es ist ebenfalls sinnvoll einen gleichen Abstand zur Längsachse für alle Emitter und/oder Sensoren zu verwenden.

Werden zwei oder mehrere Emitter und/oder zwei oder mehrere Sensoren in einer Ebene senkrecht zur Längsachse und mit gleichem Abstand zur Längsachse angeordnet, ergeben sich gleiche Abstrahlwinkel der Emitter und gleiche Sichtwinkel der Sensoren in das Rohr hinein. Die von den Emittern emittierten Messsignale breiten sich so auf gleiche Art und Weise im Rohr aus.

Vorteilhafterweise bilden sich zwischen benachbarten Emittern jeweils gleiche Abstände aus. Zwei Emitter sind zueinander benachbart, wenn ihr Abstand zueinander im Gegensatz zu den Abständen zu den anderen Emittern am kleinsten ist. So ergibt sich eine gleichmäßige Verteilung der Emitter und der Innenraum und der Innenmantel des Rohres werden gleichmäßig abgetastet. So wird vermieden, dass tote Winkel im Innenraum und am Innenmantel des Rohres entstehen, welche die Messsignale gar nicht oder nicht mit ausreichender Signalstärke erreichen.

In einer Ausführungsform der Detektionsvorrichtung sind mittels des Emitters Schallwellen als Messsignale emittierbar. Der Emitter ist dabei als Schallwellenemitter und der zugehörige Sensor als Schallwellensensor ausgeführt.

In einer weiteren Ausführungsform der Detektionsvorrichtung sind mittels des Emitters Laserstrahlen als Messsignale emittierbar. Der Emitter ist dabei als Laser ausgeführt und der zugehörige Sensor weist ein optisches Messprinzip auf.

In einer weiteren Ausführungsform der Detektionsvorrichtung sind mittels des Emitters Radarwellen als Messsignale emittierbar. Der Emitter ist dabei als Radarwellenemitter und der zugehörige Sensor als Radarwellensensor ausgeführt.

Je nach Ausprägung des Rohres selbst und nach Ausprägung der zu erwartenden Fehler ist es sinnvoll entweder Schallwellen, Laserstrahlen oder Radarwellen als Messsignale zu verwenden. Bestimmte Fehler können mit Schallwellen besser erkannt werden, andere mit Laserstrahlen oder Radarwellen. Weitere Kriterien bei der Auswahl zwischen Schallwellen, Laserstrahlen oder Radarwellen als Messsignal können z.B. die Robustheit der zugehörigen Emitter und Sensoren oder deren Kosten sein.

Schallwellenemitter, Radarwellenemitter und Laser mit entsprechenden Sensoren können in unterschiedlichen Kombinationen verwendet werden, um die Vorteile eines jeden Messprinzips nutzen zu können.

Vorzugsweise weist die Detektionsvorrichtung eine Verarbeitungseinheit und eine Datenverbindung auf, wobei die Verarbeitungseinheit mithilfe der Datenverbindung mit dem Sensor verbunden ist. Die Messsignale werden bei Betrieb der Detektionsvorrichtung vom Sensor an die Verarbeitungseinheit weitergeleitet. Die Verarbeitungseinheit dient der Auswertung der Messsignale. Je nach Ausprägung des Messsignals kann mittels der Verarbeitungseinheit zwischen einem einwandfreiem Zustand des Rohres und einem Zustand mit einem oder mehrerer Störfaktoren unterschieden werden. Mittels der Verarbeitungseinheit sind verschiedene Maßnahmen zur Behandlung der Störfaktoren z.B. zu deren Beseitigung einleitbar. So ist es möglich das Rohr und angrenzend angeordnete Bauteile vor größeren Schäden zu schützen.

Die Aufgabe wird durch ein Verfahren zur Detektion von Störfaktoren in einem Rohr mit den Merkmalen des Patentanspruchs 12 gelöst, indem ein Emitter mit einem axialen Abstand zu einem Rohrende angeordnet ist, wobei der Emitter einen radialen Abstand zu einer Längsachse des Rohres aufweist, welcher größer ist als der radiale Abstand einer Innenwand des Rohres zu dessen Längsachse, wobei mittels des Emitters Messsignale in das Rohr hinein emittiert werden, wobei ein Sensor mit einem axialen Abstand zu einem Rohrende angeordnet ist, wobei der Sensor einen radialen Abstand zu einer Längsachse des Rohres aufweist, welcher größer ist als der radiale Abstand der Innenwand des Rohres zu dessen Längsachse, wobei mittels des Sensors reflektierte Messsignale außerhalb des Rohres empfangen werden.

Eine solche Anordnung der Detektionsvorrichtung neben dem Rohr führt dazu, dass durch die Detektionsvorrichtung kein Eingriff in das Waffensystem notwendig ist. Das Rohr weist vorzugsweise keine strukturschwächenden Befestigungsmittel für die Detektionsvorrichtung auf. Die Detektionsvorrichtung ist an unterschiedlichen Rohrtypen bzw. Waffensystemen einsetzbar. Ein besonders einfacher Austausch eines defekten Rohres gegen ein anderes, einwandfreies Rohr ist ohne Wechsel der Detektionsvorrichtung möglich. Weiterhin ist eine besonders einfache Konstruktion der Detektionsvorrichtung möglich, da die Ausführung des Rohres eine untergeordnete Rolle spielt.

Durch die Emittierung der Messsignale von außen in das Rohr hinein, gelangen die Messsignale direkt zu den zu überprüfenden Bereichen, nämlich dem Innenraum des Rohres und dem Innenmantel des Rohres. Das macht eine Auswertung der Messsignale besonders einfach, da das Messsignal nicht durch weitere Bauteile beeinflusst wird.

In einer besonders bevorzugten Ausführungsform der Erfindung werden in der Verarbeitungseinheit Algorithmen ausgeführt, um die Position und/oder die Art des Störfaktors zu bestimmen. In solchen Algorithmen werden die empfangenen Signale mit Referenzsignalen von einem einwandfreien Rohr oder spezifischen Störfaktoren verglichen. Ein spezieller Störfaktor, z.B. ein als Riss im Rohr ausgeprägter Defekt des Rohres ruft ein spezielles Muster im Messsignal hervor. Die Muster sind in der Verarbeitungseinheit hinterlegt und werden mit dem aktuell anliegenden Messsignal verglichen. Bei einer Übereinstimmung ist die Art des Störfaktors und dessen Position bekannt.

Vorteilhafterweise werden in der Verarbeitungseinheit Algorithmen ausgeführt, um von den Sensoren übermittelte Teile des Messsignals auszublenden, welche nicht relevante Bereiche betreffen. Auf diese Weise wird sichergestellt, dass nur relevante Störfaktoren detektiert werden. Die Gefahr, dass eine Störquelle erkannt wird, obwohl gar keine vorhanden ist wird minimiert. Außerdem vermindert sich der Aufwand zur Detektierung der Störfaktoren, wenn nur relevante Bereiche im Detail untersucht werden. Die Erkennung von nicht relevanten Bereichen kann z.B. durch die Auswertung der Laufzeiten zwischen Emittierung des Messsignals mittels des Emitters und Empfangen dieses Messsignals mittels des Sensors durchgeführt werden. Nur in einem bestimmten Laufzeitbereich wird der Innenraum des Rohres und dessen Innenmantel abgetastet. Entsprechend in der Verarbeitungseinheit hinterlegte Muster können auch zur Identifizierung relevanter Bereiche dienen.

Es gibt eine Vielzahl von Möglichkeiten, die Erfindung auszugestalten und weiterzubilden. Es darf zunächst auf die dem Patentanspruch 1 nachgeordneten Patentansprüche verwiesen werden. Im Folgenden wird nun eine bevorzugte Ausgestaltung der Erfindung anhand der Zeichnung und der dazugehörigen Beschreibung näher erläutert. In der Zeichnung zeigt:
- Fig.1: schematisch eine Seitenansicht eines Ausführungsbeispiels der erfindungsgemäßen Detektionsvorrichtung mit einem Rohr im Schnitt,
- Fig.2: schematisch eine Seitenansicht des Ausführungsbeispiels der erfindungsgemäßen Detektionsvorrichtung mit einem Rohr mit Störfaktoren im Schnitt und
- Fig.3: schematisch eine Draufsicht des Ausführungsbeispiels der erfindungsgemäßen Detektionsvorrichtung mit einem Rohr im Schnitt.

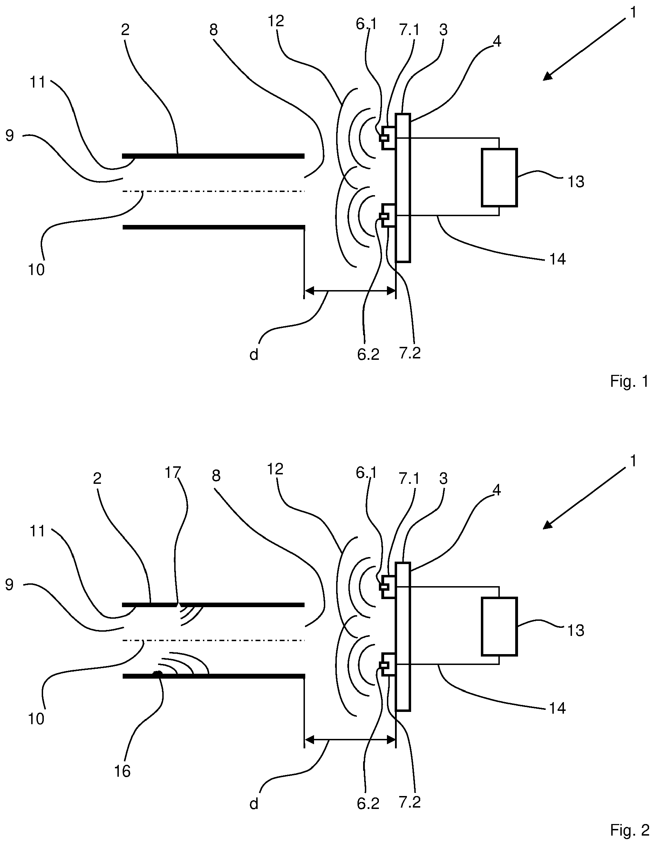

In Fig. 1 ist schematisch eine Seitenansicht eines Ausführungsbeispiels der erfindungsgemäßen Detektionsvorrichtung 1 mit einem Rohr im Schnitt dargestellt. In dem hier gezeigten Ausführungsbeispiel ist das Rohr als Waffenrohr 2 ausgeführt. Im Sinne der Erfindung könnte das Rohr auch als Laderohr einer Rohrwaffe ausgeführt sein. Das Waffenrohr 2 weist eine zylinderförmige Innenwand 11 auf, deren Beschaffenheit einen wichtigen Einfluss auf die Funktion der Rohrwaffe hat. Das Waffenrohr 2 hat zwei Rohrenden, wobei ein Ende als Rohrmündung 8 ausgebildet ist, durch welche eine Munition 15 das Waffenrohr 2 bei einem Schuss verlässt. Das zweite Rohrende ist als Zuführende 9 ausgebildet, durch welches neue Munition 15 zuführbar ist. Das Waffenrohr 2 weist eine Längsachse 10 auf, welche die Symmetrieachse des Waffenrohres 2 ist. Mit einem axialen Abstand d zur Rohrmündung 8 ist ein Halter 3 angeordnet, welcher hier bei Betrieb der Detektionsvorrichtung 1 gezeigt ist. An dem Halter 3 sind drei Emitter 6.1 bis 6.3 und drei Sensoren 7.1 bis 7.3 angeordnet. Bevorzugterweise sind die drei Emitter 6.1 bis 6.3 und die drei Sensoren 7.1 bis 7.3 mit üblichen Mitteln an dem Halter 3 befestigt, z.B. mittels einer Schraub- oder Steckverbindung. In dem hier gezeigten Ausführungsbeispiel ist der Emitter 6.1 mit dem ihm zugehörigem Sensor 7.1 zu einer gemeinsamen Baueinheit zusammengefasst. Auch Emitter 6.2 und Sensor 7.2 sowie Emitter 6.3 und Sensor 7.3 bilden jeweils eine Baueinheit.

Die Emitter 6.1 bis 6.3 senden bei Betrieb der Detektionsvorrichtung 1 Messsignale 12 in Form von Schallwellen in den Innenraum des Waffenrohres 2. Dieser Innenraum wird durch die Innenwand 11, die Rohrmündung 8 und das Zuführende 9 begrenzt. Das Messsignal 12 ist mithilfe entsprechender Algorithmen klar und eindeutig identifizierbar. Ein Messvorgang dauert so lange, wie die Schallwellen benötigen, um von den Emittern 6.1 bis 6.3 bis zum gegenüberliegenden Rohrende, in der hier gezeigten Anordnung dem Zuführende 9, und wieder zurück zu den Sensoren 7.1 bis 7.3 zu gelangen. In Fig.1 ist das Waffenohr 2 in einwandfreiem Zustand, so dass die emittierten Schallwellen an keiner Stelle reflektiert werden. Die von den Sensoren 7.1 bis 7.3 detektierten Messsignale 12 werden über eine Datenverbindung 14 an eine Verarbeitungseinheit 13 weitergeleitet. In der Verarbeitungseinheit 13 werden Algorithmen zur Analyse der Messsignale 12 ausgeführt. Die ankommenden Messsignale 12 werden dabei mit Referenzsignalen verglichen, um etwaige Störfaktoren oder wie in dem in Fig. 1 gezeigten Fall ein einwandfreies Waffenrohr 2 zu identifizieren. In der Verarbeitungseinheit 13 liegt somit die Information vor, dass das Waffenrohr 2 keine Störfaktoren aufweist. Diese Informationen dient z.B. einer hier nicht gezeigten automatischen Munitionsladevorrichtung dazu, eine neue Munition 15 zuzuführen. Die erfindungsgemäße Detektionsvorrichtung 1 ist von großer Bedeutung für die einwandfreie Funktion einer solchen automatischen Munitionsladevorrichtung. Weitere Verwendungsmöglichkeiten der mittels der Detektionsvorrichtung 1 generierten Informationen sind denkbar.

Im Gegensatz zu der in Fig.1 gezeigten Anordnung könnte die Detektionsvorrichtung 1 auch auf der gegenüberliegenden Seite des Waffenrohres 2 mit entsprechenden Abständen zum Zuführende 9 angeordnet sein.

In Fig. 2 ist schematisch eine Seitenansicht des Ausführungsbeispiels der erfindungsgemäßen Detektionsvorrichtung 1 mit einem Rohr mit Störfaktoren im Schnitt dargestellt. Es werden in Fig. 2 dieselben Bezugszeichen wie in Fig.1 verwendet. Da Fig. 2 im Wesentlichen mit Fig. 1 identisch ist, wird hier auf die Beschreibung zu Fig. 1 verwiesen und nur auf die Unterschiede eingegangen. Im Gegensatz zu Fig. 1 weist das Waffenrohr 2 in Fig. 2 zwei Störfaktoren auf. Dies sind ein Munitionsfragment 16 und ein Riss 17 in der Innenwand 11. Die von den Emittern 6.1 bis 6.3 ausgesendeten Messsignale 12 werden von diesem Munitionsfragment 16 und dem Riss 17 reflektiert, was durch jeweils drei Linien in der Figur symbolisiert wird, welche die Wellenfronten des Messsignals 12 symbolisieren. Zu einer bestimmten Zeit, welche von den Abständen zwischen Emittern 6.1 bis 6.3 und dem Störfaktor und dem Störfaktor und den Sensoren 7.1 bis 7.3 abhängt, treffen die Reflektionen der Messsignale 12 auf den Sensoren 7.1 bis 7.3 auf. Diese Informationen werden an die Verarbeitungseinheit 13 weitergeleitet. Anhand insbesondere der Zeit zwischen der Emittierung des Messsignals 12 und der Erfassung einer Reflektion wird auf den Ort des Störfaktors geschlossen. Die Reflektion vom Riss 17 trifft früher auf den Sensoren 7.1 bis 7.3 auf als die Reflektion des Munitionsfragmentes 16, da der Schall insgesamt eine kleinere Wegdifferenz überbrückt. Aufgrund der Verwendung von drei Sensoren 7.1 bis 7.3 und drei Emittern 6.1 bis 6.3 ist ein genaueres dreidimensionales Abbild des Innenraumes des Waffenrohres 2 inklusiver der Störfaktoren generierbar. Durch sogenannte Strahl-Formung kann der Messbereich der Detektionsvorrichtung 1 auf den Innenraum des Waffenrohres 2 fokussiert werden. Etwaige Störquellen außerhalb des Rohres werden so ausgeblendet. Anhand der Laufzeit der Messsignale 12 zwischen den Emittern 6.1 bis 6.3 und den Sensoren 7.1 bis 7.3 können weiterhin die Bereiche vor und hinter dem Waffenrohr 2 ausgeblendet werden. Reflektionen die vor einer Reflektion der Rohrmündung 8 oder nach einer etwaigen Reflektion auf Höhe des Zuführendes 9 auf den Sensoren 7.1 bis7.3 eintreffen sind bezüglich des Zustandes des Waffenrohres 2 nicht relevant.

Im Sinne der Erfindungen sind auch andere Anzahlen von Emittern und/oder von Sensoren denkbar, wie z.B. ein Emitter und drei Sensoren. Es muss bei einer Kalibrierung der Detektionsvorrichtung 1 lediglich die vorhandene Anordnung berücksichtigt werden. Bei einer solchen Kalibrierung der Detektionsvorrichtung 1 wird des Weiteren das zu detektierende Waffenrohr 2 berücksichtigt. Eine Kalibrierung der Detektionsvorrichtung 1 ist für eine Vielzahl verschiedener Waffenrohre durchführbar.

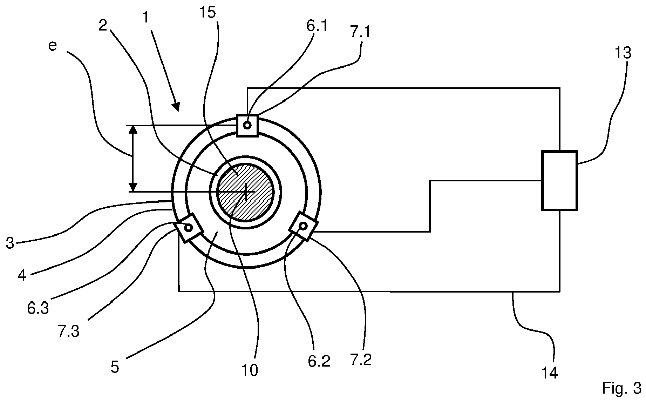

In Fig. 3 ist schematisch eine Draufsicht auf das Ausführungsbeispiel der erfindungsgemäßen Detektionsvorrichtung 1 mit einem Rohr im Schnitt dargestellt. Die Blickrichtung geht vom Rohr zur Detektionsvorrichtung 1 hin. Es werden die gleichen Bezugszeichen wie in Fig. 1 und 2 verwendet. Im Folgenden wird insbesondere auf die Unterschiede zu den vorangehenden Figuren eingegangen und für gleiche Bauteile wird auf die Beschreibung zu den vorangehenden Figuren verwiesen.

In Fig. 3 ist zusätzlich eine Munition 15 im Schnitt dargestellt, welche sich z.B. nach einem Ladevorgang in dem Waffenrohr 2 befindet. In dieser Schnittdarstellung bilden sowohl die Munition 15, wie auch das Waffenrohr 2 einen Kreis. Der Mittelpunkt des Kreises, welcher durch das Waffenrohr 2 gebildet wird, ist Teil der Längsachse 10 des Waffenrohres 2. In dieser Ansicht ist besonders gut die Ausführung des Halters 3 und die Anordnung der Emitter 6.1. bis 6.3 und Sensoren 7.1 bis 7.3 an diesem Halter 3 zu sehen. Der Halter 3 weist einen ringförmigen Rahmen 4 auf. Die Baueinheit aus Emitter 6.1 und Sensor 7.1 weist einen radialen Abstand e zur Längsachse 10 des Waffenrohres 2 auf. Dieser radiale Abstand e ist größer als der Radius der Innenwand 11 des Waffenrohres 2. Aufgrund der konzentrischen Anordnung des ringförmigen Rahmens 4 weisen auch die Emitter 6.2 und 6.3, sowie die Sensoren 7.2 und 7.3 den radialen Abstand e zur Längsachse 10 auf. Somit ist sichergestellt, dass die Munition 15 in Richtung der Längsachse 10 durch die Detektionsvorrichtung 1 hindurch in das Waffenrohr 2 hinein führbar oder aus dem Waffenohr 2 hinaus schießbar ist. Bei diesem Vorgang passiert die Munition 15 eine Öffnung 5 der Detektionsvorrichtung 1, welche durch die oben beschriebene Anordnung der Bauteile der Detektionsvorrichtung 1 gebildet wird. Die einzelnen Baueinheiten aus Emitter 6.1 und Sensor 7.1, Emitter 6.2 und Sensor 7.2 und Emitter 6.3 und Sensor 7.3 weisen jeweils einen gleichen Abstand zueinander auf und bilden somit ein gleichseitiges Dreieck. Die Ausführung des Rahmens 4 ist im Sinne der Erfindung variabel, wichtig ist lediglich, dass die entstehende Öffnung 5 groß genug ist, um die Munition 15 passieren zu lassen.

Die hier gezeigte Anordnung der Emitter 6.1. bis 6.3 und Sensoren 7.1 bis 7.3 in einer Ebene senkrecht zur Längsachse 10, mit gleichen Abständen e zur Längsachse 10 und mit gleichen Abstanden der drei gebildeten Baueinheiten zueinander, weist Vorteile bei der Auswertung der Messsignale 12 in der Verarbeitungseinheit 13 auf. Aufgrund dieser Gleichförmigkeit entsteht ein besonders ausgeprägtes und somit leicht zu erkennendes Muster bei an Störfaktoren reflektierten Messsignalen 12. Die in der Verarbeitungseinheit 13 ausgeführten Algorithmen können aufgrund dieser symmetrischen Anordnung der Emitter 6.1. bis 6.3 und Sensoren 7.1 bis 7.3 besonders einfach ausgeführt werden ohne Einbußen bezüglich der Messgenauigkeit hinnehmen zu müssen.

Es ist auch denkbar, dass die Emitter 6.1. bis 6.3 Laserstrahlen oder Radarwellen emittieren und die Sensoren 7.1 bis 7.3 entsprechend Laserstrahlen oder Radarwellen detektierten. Es werden dazu entsprechende Bauteile verwendet. Die Auswertung der Messsignale 12 in der Verarbeitungseinheit 13 erfolgt dann mit Hilfe angepasster Algorithmen analog zu der Auswertung der Messsignale 12 der oben beschriebenen Schallwellen.

Die erfindungsgemäße Detektionsvorrichtung 1 findet insbesondere Anwendung in einer automatischen Munitionszuführeinrichtung einer Rohrwaffe in gepanzerten Fahrzeugen. Mit Hilfe der in der Detektionsvorrichtung 1 generierten Informationen, können Fehlfunktionen der Munitionszuführeinrichtung und des Waffenrohres 2 effektiv vermieden werden. Störfaktoren können schnell beseitigt werden, um nachfolgend in den gewünschten Betrieb übergehen zu können. Zusätzlich können die Informationen als Grundlage für ein umfassendes Wartungssystem der Rohrwaffe genutzt werden.

Die erfindungsgemäße Detektionsvorrichtung 1 kann aber selbstverständlich für jede Art von Rohrwaffe auch unabhängig einer automatischen Munitionsladevorrichtung verwendet werden.

### Bezugszeichenliste

- 1: Detektionsvorrichtung
- 2: Waffenrohr
- 3: Halter
- 4: Rahmen
- 5: Öffnung
- 6.1: Emitter
- 6.2: Emitter
- 6.3: Emitter
- 7.1: Sensor
- 7.2: Sensor
- 7.3: Sensor
- 8: Rohrmündung
- 9: Zuführende
- 10: Längsachse
- 11: Innenwand
- 12: Messsignale
- 13: Verarbeitungseinheit
- 14: Datenverbindung
- 15: Munition
- 16: Munitionsfragment
- 17: Riss
- d: axialer Abstand
- e: radialer Abstand

## Patentansprüche

1. Detektionsvorrichtung (1) zur Erkennung von Störfaktoren (16, 17) in einem Rohr (2), mit einem Emitter (6.1 bis 6.3), einem Sensor (7.1 bis 7.3) und einem Halter (3), wobei das Rohr (2) als Waffenrohr oder Laderohr einer Rohrwaffe ausgebildet ist, wobei der Emitter (6.1 bis 6.3) und der Sensor (7.1 bis 7.3) an dem Halter (3) angeordnet sind,
**dadurch gekennzeichnet, dass**
der Emitter (6.1 bis 6.3) mit einem axialen Abstand (d) zu einem Rohrende (8, 9) angeordnet ist, wobei der Emitter (6.1 bis 6.3) einen radialen Abstand (e) zu einer Längsachse (10) des Rohres (2) aufweist, welcher größer ist als der radiale Abstand einer Innenwand (11) des Rohres (2) zu dessen Längsachse (10),
wobei der Sensor (7.1 bis 7.3) mit einem axialen Abstand (d) zu dem Rohrende (8, 9) angeordnet ist, wobei der Sensor (7.1 bis 7.3) einen radialen Abstand (e) zu der Längsachse (10) des Rohres (2) aufweist, welcher größer ist als der radiale Abstand der Innenwand (11) des Rohres (2) zu dessen Längsachse (10),
wobei mittels des Emitters (6.1 bis 6.3) Messsignale (12) in das Rohr (2) hinein emittierbar sind und wobei mittels des Sensors (7.1 bis 7.3) reflektierte Messsignale (12) empfangbar sind.

2. Detektionsvorrichtung (1) nach Anspruch 1
**dadurch gekennzeichnet, dass**
der Halter (3) einen Rahmen (4) aufweist, wobei der Rahmen (4) eine Öffnung (5) begrenzt, durch welche eine Munition (15) hindurchführbar ist.

3. Detektionsvorrichtung (1) nach Anspruch 1 oder 2
**dadurch gekennzeichnet, dass**
zwei oder mehrere Emitter (6.1 bis 6.3) an dem Halter (3) angeordnet sind.

4. Detektionsvorrichtung (1) nach einem der Ansprüche 1 bis 3
**dadurch gekennzeichnet, dass**
zwei oder mehrere Sensoren (7.1 bis 7.3) an dem Halter (3) angeordnet sind.

5. Detektionsvorrichtung (1) nach einem der Ansprüche 3 oder 4
**dadurch gekennzeichnet, dass**
zwei oder mehrere Emitter (6.1 bis 6.3) und/oder zwei oder mehrere Sensoren (7.1 bis 7.3) in einer Ebene senkrecht zur Längsachse (10) angeordnet sind

6. Detektionsvorrichtung (1) nach einem der Ansprüche 3 bis 5
**dadurch gekennzeichnet, dass**
zwei oder mehrere Emitter (6.1 bis 6.3) und/oder zwei oder mehrere Sensoren (7.1 bis 7.3) einen gleichen Abstand (6) zur Längsachse (10) aufweisen.

7. Detektionsvorrichtung (1) nach einem der Ansprüche 3 bis 6
**dadurch gekennzeichnet, dass**
sich zwischen benachbarten Emittern (6.1 bis 6.3) jeweils gleiche Abstände ausbilden.

8. Detektionsvorrichtung (1) nach einem der Ansprüche 1 bis 7
**dadurch gekennzeichnet, dass**
mittels des Emitters (6.1 bis 6.3) Schallwellen als Messsignale (12) emittierbar sind.

9. Detektionsvorrichtung (1) nach einem der Ansprüche 1 bis 7
**dadurch gekennzeichnet, dass**
mittels des Emitters (6.1 bis 6.3) Laserstrahlen als Messsignale (12) emittierbar sind.

10. Detektionsvorrichtung (1) nach einem der Ansprüche 1 bis 7
**dadurch gekennzeichnet, dass**
mittels des Emitters (6.1 bis 6.3) Radarwellen als Messsignale (12) emittierbar sind.

11. Detektionsvorrichtung (1) nach einem der Ansprüche 1 bis 10
**dadurch gekennzeichnet, dass**
die Detektionsvorrichtung (1) eine Verarbeitungseinheit (13) und eine Datenverbindung (14) aufweist, wobei die Verarbeitungseinheit (13) mithilfe der Datenverbindung (14) mit dem Sensor (7.1 bis 7.3) verbunden ist.

12. Verfahren zur Detektion von Störfaktoren (16, 17) in einem Rohr (2),
wobei das Rohr (2) als Waffenrohr oder Laderohr einer Rohrwaffe ausgebildet ist, wobei mit einem Emitter (6.1 bis 6.3) Messsignale (12) emittiert werden und mit einem Sensor (7.1 bis 7.3) reflektierte Messsignale (12) empfangen werden
**dadurch gekennzeichnet, dass**
der Emitter (6.1 bis 6.3) mit einem axialen Abstand (d) zu einem Rohrende (8, 9) angeordnet ist, wobei der Emitter (6.1 bis 6.3) einen radialen Abstand (e) zu einer Längsachse (10) des Rohres (2) aufweist, welcher größer ist als der radiale Abstand einer Innenwand (11) des Rohres (2) zu dessen Längsachse (10), wobei mittels des Emitters (6.1 bis 6.3) Messsignale (12) in das Rohr (2) hinein emittiert werden,
wobei der Sensor (7.1 bis 7.3) mit einem axialen Abstand (d) zu einem Rohrende (8, 9) angeordnet ist, wobei der Sensor (7.1 bis 7.3) einen radialen Abstand (e) zu einer Längsachse (10) des Rohres (2) aufweist, welcher größer ist als der radiale Abstand der Innenwand (11) des Rohres (2) zu dessen Längsachse (10), wobei mittels des Sensors (7.1 bis 7.3) reflektierte Messsignale (12) außerhalb des Rohres (2) empfangen werden.

13. Verfahren nach Anspruch 12,
**dadurch gekennzeichnet, dass**
in der Verarbeitungseinheit (13) Algorithmen ausgeführt werden, um die Position und/oder die Art des Störfaktors (16, 17) zu bestimmen.

14. Verfahren nach Anspruch 12 oder 13,
**dadurch gekennzeichnet, dass**
in der Verarbeitungseinheit Algorithmen ausgeführt werden, um von den Sensoren (7.1 bis 7.3) übermittelte Teile des Messsignals (12) auszublenden, welche nicht relevante Bereiche des Rohres (2) betreffen.
